# EUROPEAN PATENT APPLICATION

(11) **EP 4 306 829 A1**
(43) Date of publication of application: **17.01.2024**
(21) Application number: 23175344.3
(22) Date of filing: 25.05.2023
(51) Int. Cl.: F16K 5/06, F16K 37/00, F16K 31/60

(54) **HIGHLY VERSATILE BALL VALVE**

(30) Priority: 12.07.2022 IT 202200014602
(71) Applicant: EUROTIS S.r.l., 20094 Corsico, MI (IT)
(72) Inventor: FRANCHI, Andrea Luigi, 20081 ABBIATEGRASSO MI (IT)
(74) Representative: Modiano, Micaela Nadia

(57) **Abstract**

A highly versatile ball valve (1), comprising a valve body (2) and an actuation element (3) adapted to allow the actuation of the valve; the valve is certified for use both in gas systems and in water systems, and comprises detachable and interchangeable identification means (4) adapted to be applied to the actuation element (3) in order to mark the use of the valve.

## Description

The present invention relates to a highly versatile ball valve. More particularly, the present invention relates to a ball valve that can be employed for uses of hot water, cold water, and gas systems.

As is known, ball valves, which are flow control valves, are used for both gas and water systems.

In order to distinguish the different types of ball valve, i.e., for water (hot and/or cold) and gas systems, these valves are marked with a different color for the actuation element, which can be of the lever or butterfly type.

In the case of valves used in the gas sector, the lever or butterfly is provided in yellow, while in the case of ball valves for hot water systems the lever is red, and in the case of cold water systems the lever is blue.

Therefore, an installation technician who has to decide which type of ball valve to use depending on the system on which he has to work must choose a valve and a lever or butterfly with the appropriate color.

This on the one hand makes it extremely easy to identify the ball valve to be used, but on the other hand obviously entails a high cost due to the fact that ball valves with a plurality of levers of different colors must be produced so that they can be matched to the respective ball valves in order to meet the need of the installation technician.

This therefore means high production costs and high storage costs, since the installation technician must be able to purchase in each instance the levers of the desired color to be matched with the corresponding ball valves.

The ball valves, regardless therefore of the type of lever, also must be certified either for water systems or for gas systems.

The fact of having to have two types of ball valves, which can be used for water systems or for gas systems, doubles the number of products that must be kept in stock, paired with the corresponding levers mentioned above.

The aim of the present invention is to provide a highly versatile ball valve that can be used equally for water systems and gas systems.

Within this aim, an object of the present invention is to provide a highly versatile ball valve that can be readily identified as a ball valve for gas or a ball valve for water, without the need to resort to different colors of the respective actuation element.

Another object of the present invention is to provide a highly versatile ball valve that can reduce production and storage costs.

Not least object of the present invention is to provide a ball valve that is highly reliable, relatively easy to provide and at competitive costs.

This aim, as well as these and other objects that will become better apparent hereinafter, are achieved by a highly versatile ball valve, comprising a valve body and an actuation element adapted to allow the actuation of the valve, characterized in that said valve is certified for use both in gas systems and in water systems, and in that it comprises detachable and interchangeable identification means adapted to be applied to said actuation element in order to mark the use of said valve.

Further characteristics and advantages of the invention will become better apparent from the description of embodiments of the ball valve according to the invention, illustrated by way of non-limiting example in the accompanying drawings, wherein:

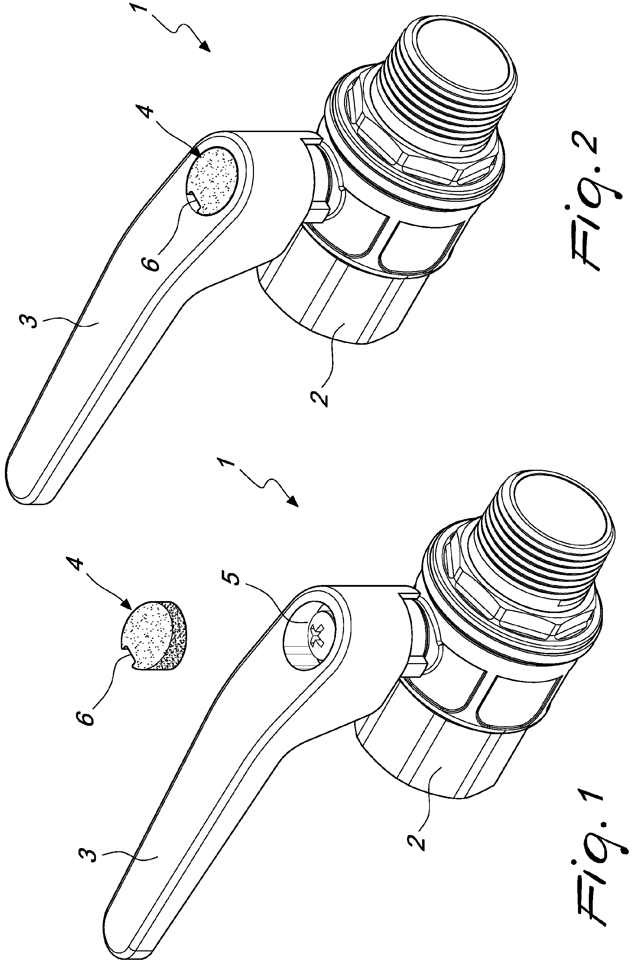

Figure 1 is a partially exploded perspective view of a ball valve according to the present invention, with a lever-type actuation element;
Figure 2 is a perspective view of the ball valve of Figure 1;

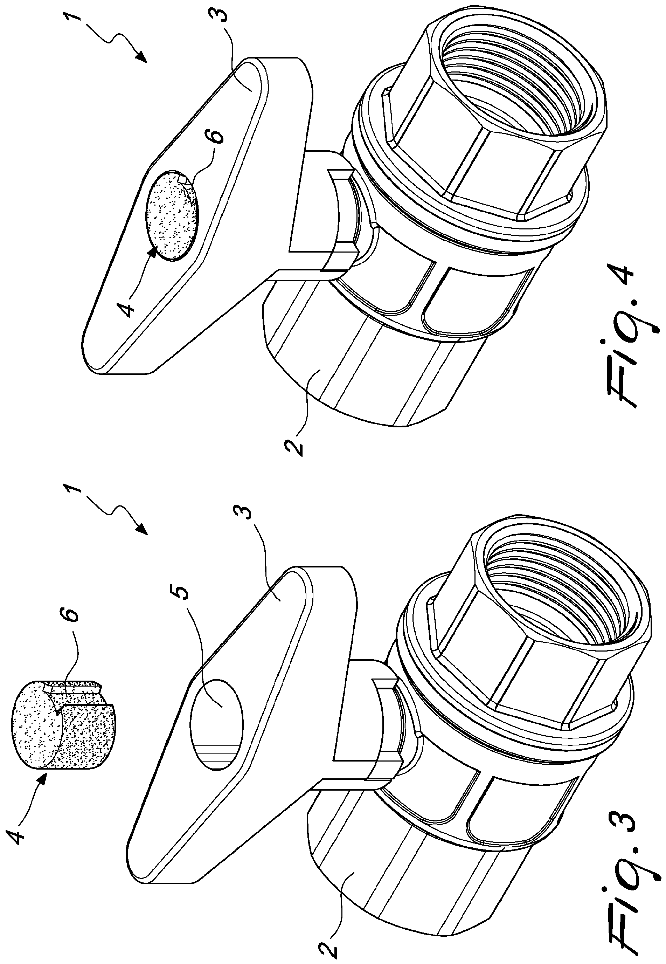

Figure 3 is a partially exploded perspective view of a ball valve according to the present invention, with a butterfly-type actuation element;
Figure 4 is a perspective view of the ball valve of Figure 3.

With reference to the figures, the ball valve according to the present invention, generally designated by the reference numeral 1, comprises a valve body 2 certified to be used for both water and gas systems and provided with an actuation element 3.

Conveniently, the actuation element 3 can be of the lever type or of the butterfly type.

In order to be able to identify the type of ball valve, in this case not for the installation technician but for the purpose of its use by the user, i.e., to make the user aware of what type of valve he is using, detachable and interchangeable identification means applied to the actuation element 3 are provided.

Such identification means, designated by the reference numeral 4, are appropriately constituted by differently colored plugs suitable to be applied to the actuation element 3, whether of the lever type or of the butterfly type.

Conveniently, the plugs 4 are yellow to indicate gas valves, blue for cold water valves, and red for hot water valves.

In this way, the installation technician can use a single type of ball valve for both gas and water systems, since the valve according to the invention is certified for both types of use, but in order to allow the end user to identify the type of valve he will be using, the installation technician applies the identification plugs 4, with the different colors, to the actuation element 3 of the ball valve that he is installing.

In this way, the end user will be aware that he/she is looking at a ball valve for gas when the identification plug 4 is yellow, whereas it is a ball valve for use with hot water when the plug is red, and with cold water when the plug is blue.

This therefore makes it possible to produce a single type of ball valve, since it is certified for both uses, gas and water, and also to produce a single type of actuation element, whether of the lever type or of the butterfly type, since said actuation element will be identified by a colored plug 4 that will be applied by the installation technician when the valve is installed, depending on the type of use for which the valve will be installed.

Appropriately, the colored plugs are suitable to be accommodated in a seat 5 formed at the screw for fixing the actuation element 3 to the valve body 2.

The coupling of the plugs 4 occurs conveniently by interlocking and the plugs are each provided with a recess or indentation 6 that allows, by acting with a screwdriver or other suitable tool, to remove the plug from its seat 5 and replace it with a plug of a different color.

In the case of a butterfly-type actuation element 3, the plugs 4 may be of a different thickness with respect to the plugs used by the lever-type actuation element 3, but their function and interchange mode remain absolutely the same.

In practice it has been found that the ball valve according to the present invention fully achieves the intended aim and objects, since it can be used equally for gas systems or water systems, simply by modifying the identification means that characterize the valve actuation element in order to make the user aware of what type of valve he is using.

The valve thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application No. 102022000014602 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A highly versatile ball valve (1), comprising a valve body (2) and an actuation element (3) which is adapted to allow the actuation of the valve, **characterized in that** said valve is certified for use both in gas systems and in water systems, and **in that** it comprises detachable and interchangeable identification means (4) which are adapted to be applied to said actuation element (3) in order to mark the use of said valve.

2. The ball valve according to claim 1, **characterized in that** said identification means (4) comprise plugs adapted to be applied at a seat (5) formed on said actuation element (3).

3. The ball valve according to claim 2, **characterized in that** said plugs (4) are of a different color depending on the type of use, i.e., gas, hot water and cold water.

4. The ball valve according to claim 1, **characterized in that** said seat (5) of the actuation element (3) adapted to accommodate said plugs (4) is formed at a screw for fixing the actuation element (3) to said valve body (2).

5. The ball valve according to one or more of the preceding claims, **characterized in that** the plugs (4) comprise a recess (6) which is adapted to be engaged by a tool in order to remove the plugs (4) from said seat (5) of the actuation element (3).

6. The ball valve according to claim 1, **characterized in that** said actuation element (3) is single both for ball valves suitable to be used for gas systems and for water systems.
